# EUROPEAN PATENT APPLICATION

(11) **EP 4 813 744 A1**
(43) Date of publication of application: **30.09.2026**
(21) Application number: 25166254.0
(22) Date of filing: 26.03.2025
(51) Int. Cl.: B60Q 1/08

(54) **DRIVER AWARENESS GUIDANCE THROUGH GAZE ESTIMATION AND ADAPTIVE HIGH BEAM CONTROL**

(71) Applicant: Zenseact AB, 417 56 Gothenburg (SE)
(72) Inventor: GYLLENHAMMAR, Magnus, 435 43 Pixbo (SE); TONDERSKI, Adam, 417 51 Göteborg (SE); HESS, Georg, 413 25 Göteborg (SE)
(74) Representative: Zacco Sweden AB

(57) **Abstract**

Computer-implemented methods and related aspects for adaptive high beam control for a vehicle are disclosed. The computer-implemented method (S100) comprises obtaining (S101) driver state data originating from a driver monitoring system of the vehicle. Here, the driver state data comprises a set of eye gaze directions of a driver of the vehicle over time. The method further comprises obtaining (S102) perception data originating from a perception system of the vehicle. The perception system comprises one or more sensors for detecting objects in a surrounding environment of the vehicle, and the perception data comprises a set of positions of a detected object in the surrounding environment of the vehicle over time. The method further comprises determining (S103) an awareness of the driver to the detected object based on the set of eye gaze directions of the driver in relation to the set of positions of the detected object. The method further comprises, in response to the driver being determined as unaware of the detected object, transmitting (S104) a signal to an adaptive high beam control unit of the vehicle so to cause the adaptive high beam control unit to control an illumination of a space in front of the vehicle to cast high beam illumination towards the detected object by controlling one or more headlights of the vehicle.

## Description

### TECHNICAL FIELD

The disclosed technology relates to methods and systems for adaptive high beam control for a vehicle. In particular, but not exclusively the disclosed technology relates to driver awareness guidance through gaze estimation and adaptive high beam control.

### BACKGROUND

Advanced Driver Assistance Systems (ADAS) have significantly improved vehicle safety and driving comfort by incorporating various automated driving technologies. These systems include lane-keeping assistance, adaptive cruise control, collision avoidance, and automated emergency braking. However, the effectiveness of ADAS depends not only on external sensor data but also on the driver's engagement and readiness to take control when necessary.

To address this challenge, modern vehicles are increasingly equipped with Driver Monitoring Systems (DMS) that assess driver attentiveness using cameras, other sensors, and machine learning algorithms. These systems detect signs of fatigue, distraction, or inattention and provide alerts or intervention when needed. However, integrating DMS with ADAS is still a technical challenge, as current implementations often function separately rather than in a cohesive, adaptive manner.

There is accordingly a need for improved solutions that integrate various sub-systems of the vehicle so to improve overall road safety.

### SUMMARY

The herein disclosed technology seeks to mitigate, alleviate or eliminate one or more of the above-identified deficiencies and disadvantages in the prior art to address various problems relating to the interaction between the driver and the vehicle's safety systems.

Various aspects and embodiments of the disclosed technology are defined below and in the accompanying independent and dependent claims.

A first aspect of the disclosed technology comprises a computer-implemented method for adaptive high beam control for a vehicle. The computer-implemented method comprises obtaining driver state data originating from a driver monitoring system of the vehicle. Here, the driver state data comprises a set of eye gaze directions of a driver of the vehicle over time. The method further comprises obtaining perception data originating from a perception system of the vehicle. The perception system comprises one or more sensors for detecting objects in a surrounding environment of the vehicle, and the perception data comprises a set of positions of a detected object in the surrounding environment of the vehicle over time. The method further comprises determining an awareness of the driver to the detected object based on the set of eye gaze directions of the driver in relation to the set of positions of the detected object. The method further comprises, in response to the driver being determined as unaware of the detected object, transmitting a signal to an adaptive high beam control unit of the vehicle so to cause the adaptive high beam control unit to control an illumination of a space in front of the vehicle to cast high beam illumination towards the detected object by controlling one or more headlights of the vehicle.

A second aspect of the disclosed technology comprises a computer program product comprising instructions which, when the program is executed by a computer, causes the computer to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computer, causes the computer to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for adaptive high beam control for a vehicle. The system comprises control circuitry configured to obtain driver state data originating from a driver monitoring system of the vehicle. The driver state data comprises a set of eye gaze directions of a driver of the vehicle over time. The control circuitry is further configured to obtain perception data originating from a perception system of the vehicle. The perception system comprises one or more sensors for detecting objects in a surrounding environment of the vehicle, and the perception data comprises a set of positions of a detected object in the surrounding environment of the vehicle over time. Further, the control circuitry is configured to determine an awareness of the driver to the detected object based on the set of eye gaze directions of the driver in relation to the set of positions of the detected object. Moreover, the control circuitry is configured to, in response to the driver being determined as unaware of the detected object, transmit a signal to an adaptive high beam control unit of the vehicle so to cause the adaptive high beam control unit to control an illumination of a space in front of the vehicle to cast high beam illumination towards the detected object by controlling one or more headlights of the vehicle. With this aspect of the disclosed technology, similar advantages and preferred features are present as in the other aspects.

A fifth aspect of the disclosed technology comprises a vehicle comprising a system according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the interaction between a driver and a vehicle's safety systems may be improved due to a reduced risk of the driver receiving unnecessary or irrelevant warnings or alerts.

An advantage of some embodiments is that the driver is provided with an intuitive and direct feedback of potentially unperceived objects in the surrounding environment of the vehicle, thereby improving overall road safety.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments, when taken in conjunction with the accompanying drawings, in which:
Fig. 1 is a schematic flowchart representation of a method for adaptive high beam control for a vehicle in accordance with some embodiments.
Fig. 2 is a schematic block diagram representation of a system for adaptive high beam control for a vehicle in accordance with some embodiments.
Fig. 3 is a schematic illustration of a vehicle in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

In many of today's in-vehicle safety systems a large focus is put on alerting the driver about potential hazards, such as for example other vehicles appearing in the ego-vehicle's blind spot or when the distance to lead vehicle is too short. In more advanced solutions, the in-vehicle safety system may also alert the driver about potential Vulnerable Road Users (VRUs) or obstacles in the vehicles predicted path. However, these systems do this without regard to whether the driver is actually already aware of the situation in question. These warnings, without accounting for the driver's awareness of the situation in question may cause annoyance and eventually lead to the driver ignoring the warning system all together due to an excessive amount of "unnecessary" warnings. Eventually, this may lead to the driver ignoring actually dangerous situations, which may pose safety risks, not only for the driver and the other occupants of the vehicle, but also to other road users.

Thus, there is a need for a more intuitive and interactive solution that actually enhances the driver's perception of the vehicle's surroundings and that reduces the risk of emitting unnecessary warnings or notifications to the driver.

To this end, it is herein proposed to utilize the vehicle's driver monitoring system (DMS) that tracks the driver's gaze in order to deduce potential hazards or objects that the driver is deemed to be unaware of in order to actually emphasize the driver's perception rather than notifying the driver of situations that the driver is adequately tracking. Moreover, rather than just presenting information on an in-vehicle Human-Machine Interface (HMI), such as a notification on the instrument cluster or infotainment system, it is herein proposed to use the vehicle's adaptive high beam control (AHBC) unit to illuminate the potential hazard or object in real-time thereby aiding the driver more intuitively and allowing the driver to maintain his or her eyes on the road. Moreover, by illuminating the potential hazard or object, the driver is provided with immediate feedback of a missed potentially dangerous situation and thereby enabled to take the appropriate actions to mitigate any risks for the driver or other road users.

For example, while driving in the dark, the driver may have a hard time perceiving all relevant objects in the vehicle's surroundings, such as for example pedestrians wearing dark clothes walking along the edge of the road, or wildlife. However, the vehicle's perception system, which may be equipped with sensors less sensitive to low-illumination settings such as radar, LiDAR, and/or night vision cameras may easily detect such objects. Accordingly, by then controlling the vehicle's headlights to illuminate the object that the driver missed, the driver is notified of the objects presence and can take the appropriate precautions to avoid an unfortunate situation, such as a collision. Another situation may for example be if a cyclist is moving out of the vehicle's blind spot and heading in front of the vehicle. As a secondary effect, the other road users, such as the pedestrian and cyclist mentioned in the foregoing are also made aware of the fact that the vehicle's systems have perceived them and notified its driver, which can be reassuring. Moreover, it would also make the other road user aware of the approaching vehicle which could further reduce the risk of incidents.

### Definitions

Adaptive High Beam Control (AHBC) may be understood as an advanced driver assistance system (ADAS) feature that automatically and selectively illuminates areas in front of a vehicle to optimize visibility and mitigate glare for other road users. By utilizing sensors or cameras to monitor oncoming and preceding vehicles, as well as ambient conditions, the system dynamically adjusts the headlamp output in real time. This adjustment may involve lowering certain portions of the high beam or otherwise modulating its intensity, ensuring that critical areas remain well-lit while avoiding unnecessary glare and enhancing overall driving safety and comfort. In other words, by modifying the headlamp intensity or selectively blocking certain portions of the beam pattern, AHBC provides enhanced safety, driver comfort, and overall traffic efficiency in low-light scenarios, allowing the driver to maintain high-beam coverage without the need for frequent manual toggling.

Advanced Driver Assistance Systems (ADAS) may be understood as a suite of vehicular technologies that enhance driver safety, comfort, and convenience by providing support or partial automation for driving tasks. These technologies typically integrate sensor data (e.g., from cameras, radar, or LiDAR) with control algorithms to detect and respond to real-time conditions on the road. By monitoring vehicle surroundings, issuing alerts, and in some cases autonomously modifying driving parameters such as speed or steering, ADAS minimizes human error, improves situational awareness, and contributes to an overall safer driving experience.

A driver monitoring system (DMS) may be understood as a system comprising one or more cameras focused on a driver of the vehicle in order to capture images of the driver's face so to determine various facial characteristics of the driver including the position, orientation, and movement of the driver's eyes, face and head. In more detail, a DMS (sometimes called a driver state sensing (DSS) system) may be understood as a safety feature that uses a camera suitably mounted within the vehicle (e.g. on the dashboard) in order to track driver drowsiness or distraction of the driver, and to issue a warning or alert to get the driver's attention back to the task of driving. The DMS typically use a driver-facing camera equipped with infrared (IR) light-emitting diodes (LEDs) or lasers so that it can "observe" the driver's face and in particular the driver's eyes (even at night). Moreover, the DMS may comprise suitably programmed software configured to determine whether the driver is blinking more than usual, whether the eyes are narrowing or closing, and whether the head is tilting at an odd angle. It can also determine the drivers gaze direction in order to deduce whether the driver is looking at the road ahead, and whether the driver is actually paying attention or just absent-mindedly staring.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

As used herein, the term "in response to" may be construed to mean "when or "upon" or "if" depending on the context. Similarly, the phrase "in response to determining" or "if it is determined' or "when it is determined" or "in an instance of" may be construed to mean "upon determining" or "upon detecting and identifying occurrence of an event" or "in response to detecting occurrence of an event" depending on the context. Accordingly, the phrase "in response to X being equal to Y" may be construed as "when X equals Y", "if X equals Y", "when it is determined that X equals Y", or "in response to detecting/determining that X equals Y" depending on the context.

The term "perception data" refers to the information gathered by sensors and other technologies that are used by ADAS-equipped vehicles to detect and interpret their environment. This includes data collected from cameras, LiDAR, radar, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The term "obtained" from a perception module or perception system, on the other hand, may refer to "derived" from a perception model and/or "based on output data" from a perception module or system. whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous manoeuvring of said vehicle", and/or "estimate surroundings of said vehicle and make model predictions of future states of the surroundings of said vehicle".

In the present context, a "sensor" or "sensor device" refers to a specialized component or system that is designed to capture and gather information from the vehicle's surroundings. These sensors play a crucial role in enabling the ADAS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

The surrounding environment of the ego-vehicle can be understood as a general area around the ego-vehicle in which objects (such as other vehicles, landmarks, obstacles, etc.) can be detected and identified by vehicle sensors (radar, LiDAR, cameras, etc.), i.e. within a sensor range of the ego-vehicle.

### Embodiments

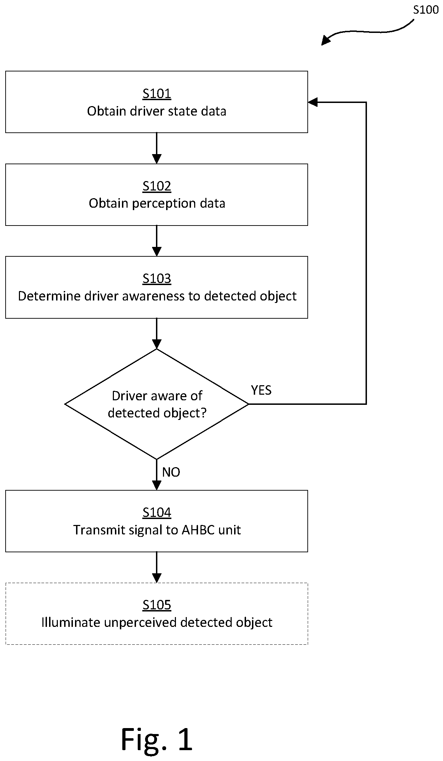

Fig. 1 is a schematic flowchart representation of a method S100 for adaptive high beam control for a vehicle. The method S100 is a computer-implemented method S100, that may be performed by a processing system of vehicle, and in particular a vehicle comprising an ADAS. The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S101 driver state data originating from a driver monitoring system (DMS) of the vehicle, the driver state data comprising a set of eye gaze directions of a driver of the vehicle over time. Accordingly, the driver state data comprises current and historical eye gaze directions of the driver. The historical eye gaze directions may for example be stored eye gaze directions as determined by the DMS over a defined time period, such as for example during the last minute, the last 30 seconds, the last 20 seconds or the like. The eye gaze directions may be stored as vectors indicating the gaze direction of the driver, the vectors may for example be expressed in a defined 3D coordinate system (e.g., a Cartesian coordinate system for 3D space). Moreover, the defined 3D coordinate system may be the same coordinate system (e.g., an absolute world frame) as employed by the vehicle's perception system to define the position of objects in the surrounding environment of the vehicle relative to the vehicle. Further, the stored eye gaze directions may further include time stamps indicating when the driver was looking in a particular direction.

In more detail, the DMS may output a gaze ray or gaze vector that indicates where the driver is looking (with some level of confidence). Moreover, one may employ a cone or angular threshold around each gaze vector (e.g., a 5° cone or a 10° cone) to account for small eye-movement inaccuracies. This may either be done by the DMS or by another processing device depending on a chosen implementation.

Further, the method S100 comprises obtaining S102 perception data originating from a perception system of the vehicle. The perception system comprises one or more sensors for detecting objects in a surrounding environment of the vehicle. Moreover, the perception data comprises a set of positions of a detected object in the surrounding environment of the vehicle over time. Naturally, the perception data may comprise a set of position of each of a plurality of detected objects in the surrounding environment of the vehicle over time. The perception system may output a 3D bounding box and/or a 2D bounding box for each object in a defined coordinate system.

The perception system may additionally or alternatively output a list of detected objects and their positions in the surrounding environment of the vehicle in reference to the defined coordinate system. The list may be update in real time based on an operating frequency of the perception system, thereby keeping an easy-to-access information source of any detected objects and their positions over time in the surrounding environment of the vehicle. The perception system may also be configured to discard any stale information by for example removing any entries that are sufficiently outdated.

As mentioned above, the objects' positions may be defined in a 3D coordinate system that defines the objects' positions relative to the vehicle. The list of detected objects may furthermore include a classification of each object (e.g., pedestrian, cyclist, car, bus, truck, traffic sign, traffic light, etc.). Moreover, the list of detected objects may further include a time stamp defining when each object was detected in each corresponding position. The perception system may further be configured to track each object in the surrounding environment of the vehicle so as to not erroneously define a previously detected object that has moved as a new object that just appeared.

Further, the method S100 comprises determining S103 an awareness of the driver to the detected object based on the set of eye gaze directions of the driver in relation to the set of positions of the detected object. In more detail, the determination S103 of the driver's awareness to the detected object may be performed by checking if any eye gaze direction of the set of eye gaze directions intersect or correlate (in space and time) with the set of positions with the detected object so to conclude whether or not the driver can be said to have observed and registered the detected object. For example, if the eye gaze directions are represented by vectors pointing towards specific points in the surrounding environment of the vehicle, then one can compare these vectors with the positions of the detected object(s) and determine whether they intersected with the detected object(s) using the time stamps of the vectors and the time stamps of the set of positions of the detected object(s). The awareness determination S103 may also be contingent on a classification or determined type of object so that the awareness of the driver to the detected object is only determined if the object is of a specified object type or object class. For example, whether the driver is aware of a tree far off to the side of the road may be less relevant than whether the driver is aware of a pedestrian about to cross the street in front of the vehicle.

In more detail, the driver may be determined as unaware of the detected object when no eye gaze direction of the set of eye gaze directions has correlated in space and time with any position of the set positions of the detected object for a set duration of time during a set time period. Stated differently, the driver may be determined as unaware of the detected object when no eye gaze direction of the set of eye gaze directions has intersected any position of the set positions of the detected object for a set duration of time during a set time period. The "set duration of time" may be understood as a "minimum time" required for the driver to gaze upon an object to be deemed as aware of that object. The "set time period" may be understood as how recently the driver has to have observed the object for the driver to be deemed as aware of that object. For example, if a driver saw a particular object 10 seconds ago, he or she may be deemed as unaware of that object at a current moment in time as the observation may be considered to be too dated. This may be particularly relevant for dynamic objects whose position relative to the vehicle can be significantly different during a time span of 10 seconds.

Then, in response to the driver being determined as unaware of the detected object, the method S100 comprises transmitting S104 a signal to an adaptive high beam control unit of the vehicle so to cause the adaptive high beam control unit to control an illumination of a space in front of the vehicle to cast high beam illumination towards the detected object by controlling one or more headlights of the vehicle. Moreover, the transmitted S104 signal may cause the AHBC to control an illumination of a space in front of the vehicle to cast high beam illumination in a specified pattern towards the detected object by controlling the one or more headlights of the vehicle. The specified pattern may for example be that the AHBC unit cause the headlights to output a series of flashes towards the detected object (e.g., 3 flashes in quick succession) in order to draw more attention from the driver towards the detected object as compared to simply casting high beam illumination towards the detected object.

Further, in some embodiments, the method S100 comprises illuminating S105, using the one or more headlights of the vehicle, the detected object that the driver is determined to be unaware of. In other words, the method S100 may comprise illuminating S105, using the one or more headlights of the vehicle, the, by the driver unperceived, detected objected.

Accordingly, once one has (a) the 3D positions of the detected object, and (b) the gaze directions of the driver, one can determine if the driver's gaze direction intersects or nearly intersects the region occupied by the object. As mentioned, the 3D positions of the detected object and the gaze directions may be provided in a common 3D coordinate system, however, it should be noted that one could alternatively project the detected object's bounding box into an image plane aligned with the driver's perspective and check if the driver's gaze lands within that bounding box. Furthermore, as mentioned, one can employ a cone or angular threshold around each gaze vector (e.g., a 5° cone or a 10° cone) to account for small eye-movement inaccuracies.

Then, in order to conclude whether or not the driver is aware of the detected object (i.e., to say if the driver "perceived" the detected object) one may employ a time threshold that requires the gaze of the driver to remain near or on the detected object for a certain minimum time. This threshold may depend on the task or object type (i.e., object class). For example, noticing a pedestrian may take a shorter time than assessing a more complex situation or reading a traffic sign. In some embodiments, this time threshold (otherwise referred to as "set duration of time" or "minimum time") may for example be a value in the range of 200 ms to 700 ms, such as a value in the range of 500 ms to 700 ms.

Additionally, or alternatively, one may employ another time threshold that requires that the point in time when the gaze of the driver was near or on the detected object cannot have occurred too long ago from a current moment in time. In other words, the driver's observation of the detected object cannot have been more than X seconds ago from a current moment in time. In some embodiments, this time threshold (otherwise referred to as "set time period") may be a value in the range 2 seconds to 20 seconds, such as a value in the range of 2 seconds to 10 seconds.

Moreover, the set time period may be dynamically set in dependence of the vehicle's speed and/or of the detected object's speed. In other words, the set time period may be determined as a function of the vehicle's speed and/or as a function of the detected object's speed. For example, if the detected object is a static object, the set time period may be set to an upper value in the range (e.g., 10 seconds) whereas if the detected object is another vehicle moving at high speed the set time period may be set to a lower value in the range (e.g., 2 seconds). This also means that the perception data may further comprise a speed of the detected object, and the speed of the ego-vehicle may be obtained from a wheel speed sensor, an Inertial Measurement Unit (IMU) of the vehicle, a Global Navigation Satellite System (GNSS) of the vehicle, or a combination thereof.

Additionally, or alternatively, one could account for the vehicle's acceleration and/or the detected object's acceleration. Thus, the set time period may be dynamically set in dependence of the vehicle's acceleration and/or of the detected object's acceleration. For example, if the perception system of the vehicle notices that the detected object exhibits a change in velocity since the driver's last glance (i.e., confirmed gaze direction on the detected object) on that detected object, the set time period could be reduced for that detected object.

Furthermore, one may employ additional criteria to determine S103 an awareness of the driver to the detected object. For example, the driver state data originating from the DMS may include a distraction parameter (e.g., pupil dilation, blink duration, or blink rate) that affects the minimum time required for the driver to gaze upon an object to be deemed as aware of that object. For example, a mild increase in dilation can correlate with cognitive focus, especially if it's not attributable to a change in ambient light. Moreover, distracted or "zoned out" individuals might have a reduced blink rate (staring) or disorganized blinking, while drowsiness can show up as slower, longer blinks. Thus, normal (relative to a baseline for that particular driver) blinking pattern and pupil dilation suggests active visual processing, and if the blinking pattern or pupil dilation diverges from a baseline blinking pattern or pupil dilation for a particular driver, one may employ longer thresholds for the "minimum time" required for the driver to gaze upon an object to be deemed as aware of that object. By adding these pupil and blink metrics, one gains insight into the quality of the visual attention, rather than relying solely on the driver's gaze direction. If gaze alone says "the driver is looking at it," but the physiological cues do not match an engaged, attentive state, one can infer that the driver may be daydreaming, fatigued, or otherwise not fully perceiving the detected object.

As mentioned, the obtained S102 perception data may further comprise a classification of the detected object. The classification may specify the type of detected object (e.g., pedestrian, cyclist, car, bus, traffic sign, etc.). Moreover, the transmission S104 of the signal to the AHBC unit may be performed in response to the driver being determined as unaware of the detected object and the classification of the detected object being one of a predefined set of object classifications. In other words, the illumination of the object using the vehicle's headlights may be dependent on the type of object so that only specific objects are illuminated. For example, one may refrain from casting high beam illumination towards an oncoming vehicle in an adjacent lane that the driver perhaps didn't perceive (instead other warnings could be utilized such as notifications on an in-vehicle HMI) whereas an undetected pedestrian that is standing on the side of the road or a road sign may be illuminated.

Furthermore, in some embodiments, the signal is transmitted S104 to the AHBC unit of the vehicle so to cause the adaptive high beam control unit to control an illumination of a space in front of the vehicle to cast high beam illumination only towards the detected object by controlling one or more headlights of the vehicle. Stated differently, rather than just simply turning high beams on and off to generally illuminate the area in front of the vehicle, one can selectively and purposely only illuminate the, by the driver unperceived, detected object assuming that the vehicle's headlight includes such capability. This capability may for example be provided by AHBC, adaptive driving beam (ADB) headlights or matrix LED headlights. In short, such solutions include multiple individually controlled LEDs (or similar light sources) that can selectively illuminate certain parts of the area in front of the vehicle while dimming or turning off light directed toward other parts. Thereby the driver is given a more direct and intuitive indication of a missed object automatically by the vehicle so that he or she can take appropriate measures.

Executable instructions for performing these functions are, optionally, included in a non-transitory computer-readable storage medium or other computer program product configured for execution by one or more processors.

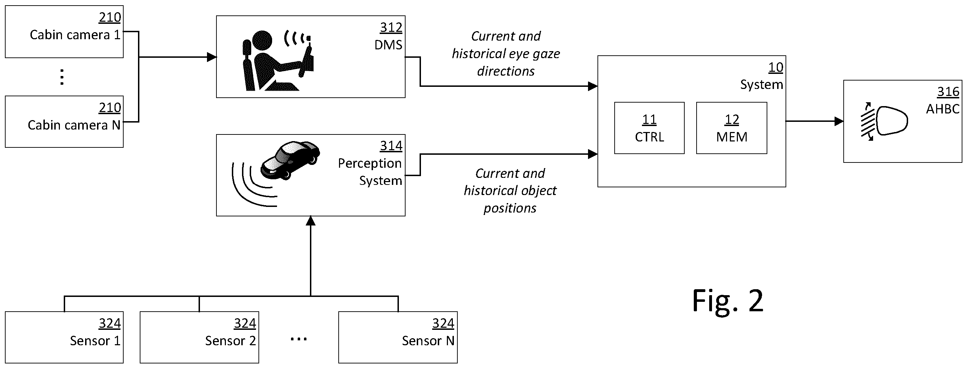

Fig. 2 is a schematic block diagram representation of a system 10 for adaptive high beam control for a vehicle in accordance with some embodiments. The system 10 comprises control circuitry (e.g. one or more processors) configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein.

It should be noted that even though the system 10 is illustrated as a separate component or module in relation to the perception system 314, the DMS 312, and the AHBC unit 316 in Fig. 2, it may alternatively be provided as an integrated part of any one of those sub-systems.

The control circuitry 11 is configured to obtain driver state data originating from a driver monitoring system 312 of the vehicle. As before, the driver state data comprises a set of eye gaze directions of a driver of the vehicle over time. Accordingly, the system 10 receives the driver's current eye gaze direction and historical eye gaze directions (tracing back to some set point back in time) from the DMS 312.

As mentioned, a DMS 312 may be understood as a system comprising one or more cameras 210 focused on a driver of the vehicle in order to capture images of the driver's face so to determine various facial characteristics of the driver including the position, orientation, and movement of the driver's eyes, face and head. In more detail, the DMS typically use a driver-facing camera 210 equipped with infrared (IR) light-emitting diodes (LEDs) or lasers so that it can "observe" the driver's face and in particular the driver's eyes (even at night). Moreover, the DMS may comprise suitably programmed software configured to determine whether the driver is blinking more than usual, whether the eyes are narrowing or closing, and whether the head is tilting at an odd angle. Thus, the DMS is configured to determine the drivers gaze direction in order to deduce where the driver looking, and in some implementations, whether the driver is actually paying attention or just absent-mindedly staring.

The control circuitry 11 is further configured to obtain perception data originating from a perception system 314 of the vehicle. The perception system accordingly comprises one or more sensors 324 (such as cameras, radars, LiDARs, etc.) for detecting objects in a surrounding environment of the vehicle. Moreover, the perception data comprises a set of positions of a detected object in the surrounding environment of the vehicle over time.

Further, the control circuitry 11 is configured to determine an awareness of the driver to the detected object based on the set of eye gaze directions of the driver in relation to the set of positions of the detected object. Then, in response to the driver being determined as unaware of the detected object, the control circuitry 11 is configured to transmit a signal to an adaptive high beam control unit 316 of the vehicle so to cause the adaptive high beam control unit to control an illumination of a space in front of the vehicle to cast high beam illumination towards the detected object by controlling one or more headlights of the vehicle.

In some embodiments, the control circuitry 11 may be configured to control an illumination of a space in front of the vehicle to cast high beam illumination towards the detected object by controlling one or more headlights of the vehicle (for example if the system 11 is implemented in the AHBC unit 316).

Moreover, the control circuitry 11 may be configured to determine the driver as unaware of the detected object when no eye gaze direction of the set of eye gaze directions has correlated in space and time with any position of the set positions of the detected object for a set duration of time during a set time period. In other words, if none of the reported eye gaze directions of the driver have intersected with a position of the detected object for a sufficient amount of time (set duration of time) in a recent enough time window (during the set time period), the driver is concluded as unaware of the detected object. Here, the set duration of time may for example be value in the range of 200 ms to 700 ms, such as a value in the range of 500 ms to 700 ms and the set time period may be a value in the range 2 seconds to 20 seconds, such as a value in the range of 2 seconds to 10 seconds.

Moreover, the set time period may be determined as a function of the vehicle's speed and/or as a function of the detected object's speed. In other words, the set time period, which defines when a driver's observation of a detected object becomes dated, may be dynamically determined in dependence of the speed of the detected object. The perception data may comprise a speed of the detected object and the speed of the vehicle may be retrieved from any suitable sensor or subsystem of the vehicle as readily understood by the skilled person in the art.

For example, the set time period may be set lower (e.g., 2 seconds) for a high-speed object as compared to a slowly moving or static object. Thus, a driver's observation of a static object (e.g., parked vehicle or traffic sign) may be considered to still be relevant even if it was concluded as observed or perceived 5 seconds ago, while the same may not hold for another vehicle moving at 100 km/h. Similarly, if the ego-vehicle is moving at high speed (e.g., 100 km/h), only the object observations made by the driver during the last 2 seconds may be relevant as compared to a situation when the ego-vehicle is moving at lower speeds (e.g., 20 km/h), in which case the object observations made by the driver during the last 5 seconds may be relevant. It should be noted that the example values are merely examples serving to facilitate the understanding of the embodiments disclosed herein and should not necessarily be construed as limiting to the protective scope defined by the appended claims.

Furthermore, the obtained perception data may comprise a classification of the detected object. The classification may define an object type, such as for example pedestrian, cyclist, dog, cat, vehicle, traffic sign, etc. Thus, the control circuitry 11 may be configured to transmit the signal to the AHBC unit 316 in response to the driver being determined as unaware of the detected object and the classification of the detected object being one of a predefined set of object classifications. In other words, the signal to the AHBC unit 316 may only be transmitted if the driver is determined as aware of the detected object and if the detected object class is a predefined object class. For example, if pedestrians are included in the predefined set of object classifications whereas trucks are not, then the signal will not be transmitted if the detected object is classified as a truck, regardless if the driver is determined as aware or unaware of the truck.

However, in some embodiments, the object classification does not dictate if the signal is transmitted or not, but instead it can dictate how the AHBC unit controls the headlights of the vehicle. For example, if the detected object is classified as a pedestrian, then the whole pedestrian is illuminated by the vehicle's headlights, whereas if the detected object is classified as a car only the area in front of the car is illuminated so as not to glare or blind other drivers.

Furthermore, in some embodiments, the control circuitry 11 is configured to transmit the signal to the adaptive high beam control unit of the vehicle so to cause the adaptive high beam control unit to control an illumination of a space in front of the vehicle to cast high beam illumination only towards the detected object by controlling one or more headlights of the vehicle. Thus, the vehicle does not simply just turn its high beam illumination, but selectively illuminates only the detected object using the vehicle's high beam.

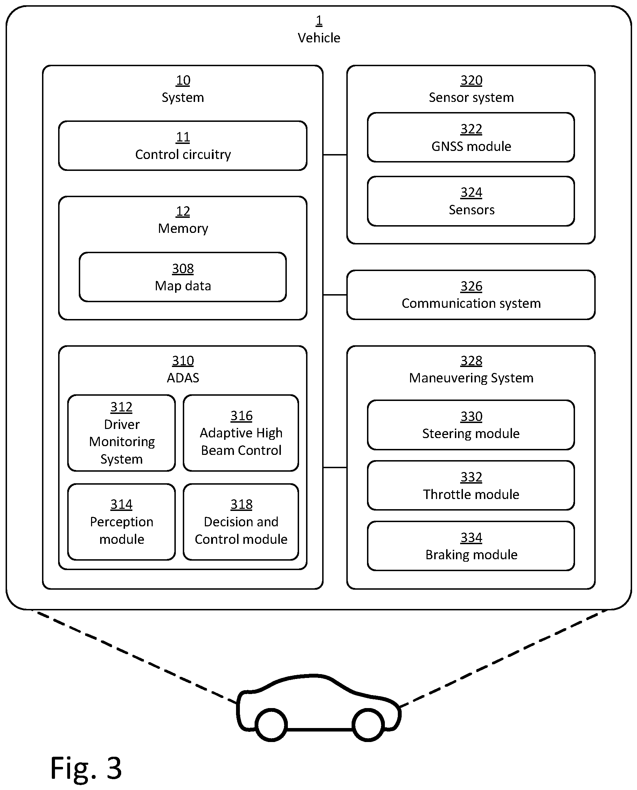

Fig. 3 is a schematic illustration of an ADAS-equipped vehicle 1 comprising such a system 10. As used herein, a "vehicle" is any form of motorized transport. For example, the vehicle 1 may be any suitable road vehicle such as a car (as illustrated herein), a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADAS 310). Moreover, the system 10 may form a part of the ADAS 310, i.e. the system 10 may be implemented as a module or feature of the ADAS. The control circuitry 11 may comprise one or more processors, such as a central processing unit (CPU), a graphics processing unit (GPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADAS 310 of the vehicle 1 in order to perform autonomous functions of the vehicle 1. The map data 308 may comprise high-definition (HD) map data. It is contemplated that the memory 12, even though illustrated as a separate element from the ADAS 310, may be provided as an integral element of the ADAS 310. In other words, according to some embodiments, any distributed or local memory device may be utilized in the realization of the present inventive concept. Similarly, the control circuitry 11 may be distributed e.g. such that one or more processors of the control circuitry 11 is provided as integral elements of the ADAS 310 or any other system of the vehicle 1. In other words, according to some embodiments, any distributed or local control circuitry device may be utilized in the realization of the present inventive concept. The ADAS 310 is configured carry out the functions and operations of the autonomous or semi-autonomous functions of the vehicle 1. The ADAS 310 can comprise a number of modules, where each module is tasked with different functions of the ADAS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LiDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADAS 310 of the vehicle, to receive instructions on how the various modules of the maneuvering system 328 should act. Thus, the ADAS 310 can control the maneuvering of the vehicle 1, for example via the decision and control module 318.

The ADAS 310 may comprise a localization module or localization block/system. The localization module may be configured to determine and/or monitor a geographical position and heading of the vehicle 1, and may utilize data from the sensor system 320, such as data from the GNSS module 322. Alternatively, or in combination, the localization module may utilize data from the one or more sensors 324. The localization system may alternatively be realized as a Real Time Kinematics (RTK) GPS in order to improve accuracy.

The ADAS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The vehicle 1 further comprises a Driver Monitoring System (DMS) 312, which may be understood as a system comprising one or more cameras 210 focused on a driver of the vehicle in order to capture images of the driver's face so to determine various facial characteristics of the driver including the position, orientation, and movement of the driver's eyes, face and head. Moreover, the DMS may comprise suitably programmed software configured to determine whether the driver is blinking more than usual, whether the eyes are narrowing or closing, and whether the head is tilting at an odd angle. It can also determine the drivers gaze direction in order to deduce whether the driver is looking at the road ahead, and whether the driver is actually paying attention or just absent-mindedly staring.

The vehicle 1 further comprises an Adaptive High Beam Control (AHBC) unit 316, which may be understood as an advanced driver assistance system (ADAS) feature that automatically and selectively illuminates areas in front of a vehicle to optimize visibility and mitigate glare for other road users. By utilizing cameras 324 and/or other sensors 324 to monitor oncoming and preceding vehicles, as well as ambient conditions, the AHBC unit 316 dynamically adjusts the headlamp output in real time. This adjustment may involve lowering certain portions of the high beam or otherwise modulating its intensity, ensuring that critical areas remain well-lit while avoiding unnecessary glare and enhancing overall driving safety and comfort.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of obtaining driver state data and obtaining perception data may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various obtaining, determining, and transmitting steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for adaptive high beam control for a vehicle (1), the computer-implemented method (S100) comprising:
obtaining (S101) driver state data originating from a driver monitoring system of the vehicle, the driver state data comprising a set of eye gaze directions of a driver of the vehicle over time;
obtaining (S102) perception data originating from a perception system of the vehicle, wherein the perception system comprises one or more sensors for detecting objects in a surrounding environment of the vehicle, the perception data comprising a set of positions of a detected object in the surrounding environment of the vehicle over time;
determining (S103) an awareness of the driver to the detected object based on the set of eye gaze directions of the driver in relation to the set of positions of the detected object;
in response to the driver being determined as unaware of the detected object:
transmitting (S104) a signal to an adaptive high beam control unit of the vehicle so to cause the adaptive high beam control unit to control an illumination of a space in front of the vehicle to cast high beam illumination towards the detected object by controlling one or more headlights of the vehicle.

2. The computer-implemented method (S100) according to claim 1, wherein the driver is determined as unaware of the detected object when no eye gaze direction of the set of eye gaze directions has correlated in space and time with any position of the set positions of the detected object for a set duration of time during a set time period.

3. The computer-implemented method (S100) according to claim 2, wherein the set duration of time is in the range between 500 ms and 700 ms.

4. The computer-implemented method (S100) according to claim 2 or 3, wherein the set time period is a value in the range between the most recent 2 seconds and the most recent 10 seconds.

5. The computer-implemented method (S100) according to any one of claims 2-4, wherein the set time period is determined as a function of the vehicle's speed and/or as a function of the detected object's speed.

6. The computer-implemented method (S100) according to any one of claims 2-5, wherein the obtained (S102) perception data further comprises a classification of the detected object; and
wherein the transmitting (S104) the signal to the adaptive high beam control unit is performed in response to the driver being determined as unaware of the detected object and the classification of the detected object being one of a predefined set of object classifications.

7. The computer-implemented method (S100) according to any one of claims 1-6, wherein the signal is transmitted (S104) to the adaptive high beam control unit of the vehicle so to cause the adaptive high beam control unit to control an illumination of a space in front of the vehicle to cast high beam illumination only towards the detected object by controlling the one or more headlights of the vehicle.

8. A computer program product comprising instructions which, when the program is executed by a computing device of a vehicle, causes the computing device to carry out the method (S100) according to any one of claims 1-7.

9. A computer-readable storage medium comprising instructions which, when executed by a computing device of a vehicle, causes the computing device to carry out the method (S100) according to any one of claims 1-7.

10. A system (10) for adaptive high beam control for a vehicle (1), the system (10) comprising control circuitry (11) configured to:
obtain driver state data originating from a driver monitoring system (312) of the vehicle, the driver state data comprising a set of eye gaze directions of a driver of the vehicle over time;
obtain perception data originating from a perception system (314) of the vehicle, wherein the perception system comprises one or more sensors (324) for detecting objects in a surrounding environment of the vehicle, the perception data comprising a set of positions of a detected object in the surrounding environment of the vehicle (1) over time;
determine an awareness of the driver to the detected object based on the set of eye gaze directions of the driver in relation to the set of positions of the detected object;
in response to the driver being determined as unaware of the detected object:
transmit a signal to an adaptive high beam control unit (316) of the vehicle (1) so to cause the adaptive high beam control unit to control an illumination of a space in front of the vehicle to cast high beam illumination towards the detected object by controlling one or more headlights of the vehicle.

11. The system (10) according to claim 10, wherein the driver is determined as unaware of the detected object when no eye gaze direction of the set of eye gaze directions has correlated in space and time with any position of the set positions of the detected object for a set duration of time during a set time period.

12. The system (10) according to claim 11, wherein the set duration of time is in the range between 500 ms and 700 ms.

13. The system (10) according to claim 11 or 12, wherein the set time period is a value in the range between the most recent 2 seconds and the most recent 10 seconds.

14. The system (10) according to any one of claims 11-13, wherein the set time period is determined as a function of the vehicle's speed and/or as a function of the detected object's speed.

15. A vehicle (1) comprising a system (10) according to any one of claims 10-14.
